# EUROPÄISCHE PATENTSCHRIFT

(11) **EP 0 590 439 B1**
(45) Veröffentlichungstag und Bekanntmachung des Hinweises auf die Patenterteilung: **06.03.1996**
(21) Anmeldenummer: 93114984.3
(22) Anmeldetag: 17.09.1993
(51) Int. Cl.: F21M 7/00

(54) **Scheinwerfer für Fahrzeuge**
Headlamp for vehicles
Projecteur pour véhicules

(30) Priorität: 01.10.1992 DE 4233030
(43) Veröffentlichungstag der Anmeldung: 06.04.1994
(73) Patentinhaber: Hella KG Hueck & Co., D-59552 Lippstadt (DE)
(72) Erfinder: Juth, Joachim, D-59556 Lippstadt (DE); Brummel, Reinhold, D-59609 Anröchte (DE); Korte, Walter, D-59597 Erwitte (DE); Schäfers, Franz-Josef, D-33106 Paderborn (DE)

(56) Entgegenhaltungen:
- EP-A- 0 275 095
- AU-B- 593 700
- DE-A- 3 516 813
- FR-A- 2 687 762
- US-A- 4 268 895

## Beschreibung

Die Erfindung betrifft einen Scheinwerfer für Fahrzeuge mit folgenden Merkmalen:
- ein Scheinwerfergehäuse ist auf seiner Vorderseite durch eine Lichtscheibe abgeschlossen und nimmt einen Abblendlichtscheinwerfer auf,
- der Abblendlichtscheinwerfer besteht aus
   - einem Reflektor mit einem inneren und äußeren Brennort und einem an seinem äußeren Rand angebrachten radial nach außen gerichteten Flansch,
   - einer im Bereich des inneren Brennortes des Reflektors angeordneten Lichtquelle,
   - einem aus Blech hergestellten, tischartigen Gestell, welches mit dem freien Endabschnitt seiner Beine an der in Lichtaustrittsrichtung gerichteten Seite des Flansches des Reflektors anliegt und an dem Flansch befestigt ist,
   - einer aus Glas hergestellten Linse, welche in eine Öffnung in der Oberseite des tischartigen Gestells eingesetzt ist,
   - einer zwischen Linse und Lichtquelle angeordneten Blende, deren Blendenkante als Hell-Dunkel-Grenze abgebildet ist,
- der Abblendlichtscheinwerfer ist mit dem Flansch des Reflektors an einem mit dem Scheinwerfergehäuse verbundenen Tragelement befestigt.

Ein solcher Scheinwerfer ist aus der DE 37 03 129 A 1 bekannt. Das Tragelement ist aus Kunststoff hergestellt und besteht aus einem das Gestell und die Linse umgebenden Tubus, einer den Tubus seitlich umgebenden Sichtblende und einem Fernlichtreflektor, an welchem der Tubus bzw. die Sichtblende unmittelbar angeformt ist. Das Tragelement ist um mindestens eine Achse verstellbar in dem Gehäuse gelagert, und somit sind der Fernlicht- und Abblendlichtreflektor zusammen verstellbar.

Der Abblendlichtscheinwerfer ist ausschließlich mit dem Flansch seines Reflektors an dem Tragelement und an einer mit dem Gehäuse verbundenen Verstelleinrichtung befestigt. Somit ist die aus Glas hergestellte, schwere Linse durch das tischartige Gestell freitragend mit dem Flansch des Reflektors verbunden, und es besteht ein großer Hebelarm zwischen der schweren Linse und dem Flansch des Reflektors, an welchem die Beine des Tisches befestigt sind. Damit die Linse und die einteilig mit dem Gestell ausgeführte und zwischen dem Flansch des Reflektors und der Linse in einem Abstand zum Flansch verlaufende Blende stabil und schwingungsfrei mit dem Reflektor verbunden sind, ist es notwendig, das Gestell aus entsprechend dickwandigem Blech herzustellen und Verbindungsmittel mit einer hohen Festigkeit zwischen den Beinen des Tisches und dem Flansch zu verwenden. Solche stabile Verbindungsmittel sind nur mit einem größeren technischen Aufwand montierbar. Außerdem muß das Tragelement sehr stabil ausgeführt sein, da es den Abblendlichtscheinwerfer ausschließlich an dem Flansch des Reflektors schwingungsfrei tragen soll.

Die Blende des bekannten Abblendlichtscheinwerfers ist von einem freien Endabschnitt eines zwischen zwei Beinen des Tisches verlaufenden und an die Oberseite des Tisches angeformten Stegs gebildet. Die Blende ist um eine Biegelinie zur optischen Achse hin abgewinkelt. Der Abstand zwischen der Blende und der für die Linse dienenden Anlagefläche des Gestells ist nur mit großen Fertigungstoleranzen herstellbar, und daher muß die Blende nach dem Zusammenbau des Abblendlichtscheinwerfers so einjustiert werden, daß die Blende mit ihrer Blendenkante durch den Brennpunkt der Sammellinse hindurchgeht, um zu erreichen, daß die Blendenkante als Hell-Dunkel-Grenze scharf abgebildet ist. Um einem Zurückfedern der Blende nach dem Einjustieren entgegenzuwirken, ist es zweckmäßig, die Blende durch einen zusätzlichen Arbeitsgang an dem Gestell festzusetzen. Dieses kann z. B. durch Verschweißen der Blende an den Beinen des Gestells erfolgen (siehe hierzu die DE 35 16 813 C 2). Bei diesem bekannten Gegenstand hat sich in der Praxis gezeigt, daß ein Einjustieren und ein anschließendes zusätzliches Festsetzen der Blende an den Beinen des Gestells sehr umständlich und zeitaufwendig ist.

Aufgabe der Erfindung ist es, den im Gattungsbegriff beschriebenen Scheinwerfer derart zu gestalten, daß das die schwere Linse tragende, tischartige Gestell sowohl mit ihren Beinen durch eine leicht herstellbare und eine geringe Festigkeit aufweisende Verbindung an dem Reflektor befestigbar ist als auch aus dünnwandigem Blech herstellbar ist und trotzdem die aus Glas hergestellte, schwere Linse und die Blende stabil und auf einfache Art und Weise mit dem Reflektor verbindbar ist. Darüber hinaus soll nach dem Zusammenbau des Abblendlichtscheinwerfers die Blende mit ihrer Blendenkante, ohne die Blende einjustieren zu müssen, durch den Brennpunkt der Sammellinse verlaufen.

Diese Aufgabe wird nach der Erfindung dadurch gelöst, daß
- das tischartige Gestell zusätzlich zu den mit dem Reflektor verbundenen Beinen mindestens ein weiteres Bein aufweist, mit welchem das Gestell zwischen dem Flansch des Reflektors und der Linse an dem Tragelement befestigt ist,
- an der in Lichtaustrittsrichtung gerichteten Seite des Flansches des Reflektors außer dem Gestell auch die von einem separaten Teil gebildete Blende anliegt und an dem Flansch befestigt ist.

Hierbei dient das Tragelement nicht nur der Halterung des Abblendlichtscheinwerfers, sondern ist gleichzeitig ein Verbindungselement zwischen der die schwere Linse aufnehmenden Oberseite des tischartigen Gestells und dem Flansch des Reflektors. Deswegen und weil die Befestigung des Abblendlichtscheinwerfers an dem Tragelement immer stabil ausgeführt sein muß, kann die Befestigung der mit dem Flansch des Reflektors verbundenen Beine des Gestells mit einem Verbindungselement hergestellt sein, welches in der automatischen Massenfertigung leicht und schnell montierbar ist und eine Verbindung mit geringer Festigkeit ergibt. Eine solche Verbindung ist z. B. eine Hohlnietverbindung. Es ist ausreichend, das Gestell an sehr wenigen (zwei oder drei) Befestigungsstellen mit dem Flansch des Reflektors zu verbinden, weil das Tragelement ein zusätzliches und das stabilere Verbindungselement zwischen der Linse und dem Flansch des Reflektors sein kann. Der Reflektor erstreckt sich mit seinem den Flansch aufweisenden, äußeren umlaufenden Randabschnitt bis in die Fläche, in welcher die zwischen den beiden Brennorten des Reflektors angeordnete Blende verläuft. Wegen dieses Randabschnittes des Reflektors sind die an dem Flansch befestigten Beine des Gestells entsprechend kürzer, und das Gestell weist zusammen mit dem Reflektor eine größere Steifigkeit auf. Ein weiterer Vorteil ist es, daß der Reflektor aus einem dünnwandigen Blech hergestellt werden kann, weil er mit seinem Flansch nicht nur allein das Gestell und die aus Glas hergestellte, schwere Linse trägt. Die an dem Flansch des Reflektors befestigte Blende kann auch zu einer Versteifung des dünnwandigen Reflektors führen. Nach dem Zusammenbau des Abblendlichtscheinwerfers ist es sicher, daß die Blende mit ihrer Blendenkante eine genaue Lage zur Linse bzw. ihrem Brennpunkt einnimmt, weil die für das Gestell der Linse dienende Anlagefläche des Flansches gleichzeitig die Anlagefläche für die Blende ist. Des weiteren muß das Tragelement nicht so stabil ausgeführt sein, um den Abblendlichtscheinwerfer schwingungsfrei zu halten, weil der Abblendlichtscheinwerfer nicht nur in der Ebene an dem Tragelement befestigt ist, in welcher sein Flansch verläuft, sondern auch in der Ebene, welche zwischen dem Flansch und der Linse und in einem Abstand zum Flansch des Reflektors verläuft. Hierbei kann der Hebelarm, welcher zwischen der Linse und der zwischen dem Gestell und dem Tragelement bestehenden Befestigungsstelle angeordnet ist, sehr klein sein.

Weiterhin ist es vorteilhaft, wenn das Gestell mit einem radial nach außen gebogenen Abschnitts des Beins an dem Tragelement befestigt ist. Dadurch ist die Montage des Abblendlichtscheinwerfers an dem Tragelement einfach und leicht durchführbar.

Vorteilhaft ist es weiterhin, wenn der Abschnitt des Beins um eine an die ringförmige Oberseite des Gestells angrenzend verlaufende Biegelinie abgebogen ist. Deswegen und weil bei dem erfindungsgemäßen Scheinwerfer meistens der Schwerpunkt des Abblendlichtscheinwerfers zwischen der schweren Linse und dem Flansch des Reflektors liegt, kann das Tragelement eine entsprechend geringere Festigkeit aufweisen und trotzdem den Abblendlichtscheinwerfer schwingungsfrei halten.

Ein weiterer Vorteil ist es, wenn in der Anbaulage des Abblendlichtscheinwerfers sein Reflektor oberhalb und das Gestell unterhalb oder der Reflektor unterhalb und das Gestell oberhalb der horizontalen Mittelebene des Abblendlichtscheinwerfers an dem Tragelement befestigt ist. Dadurch kann eine stabile Verbindung zwischen dem Abblendlichtscheinwerfer und dem Tragelement durch nur drei oder vier Befestigungsstellen erreicht werden.

Von Vorteil ist es weiterhin, wenn das tischartige Gestell an dem Tragelement mit zwei Beinen befestigt ist und zwischen diesen beiden Beinen ein an dem Reflektor befestigtes Bein verläuft, welches in einer in Lichtaustrittsrichtung und senkrecht verlaufenden Symmetrieebene des Gestells liegt. Wegen des symmetrischen Aufbaues des Gestells wirkt bei den im Fahrbetrieb auftretenden senkrechten Schwingungen des Fahrzeugs kein Drehmoment um die optische Achse des Abblendlichtscheinwerfers herum.

Ebenfalls ist es vorteilhaft, wenn bei einem Gestell, bei welchem die mit dem Flansch des Reflektors verbundenen Beine mit ihrem freien Endabschnitt radial nach außen gebogen sind, ein Hohlniet einteilig mit dem abgebogenen Endabschnitt der Beine ausgeführt ist, welcher durch eine entsprechende Öffnung des Flansches hindurchgesteckt ist und mit dem aus der Öffnung herausragenden Abschnitt umgebördelt ist. Eine solche Verbindung ist leicht herstellbar und kann, obwohl sie eine geringe Festigkeit aufweist, verwendet werden, weil das Tragelement zusätzlich eine Verbindung zwischen dem Flansch des Reflektors und der Linse herstellt.

Außerdem ist es vorteilhaft, wenn die ortsfeste Blende plan ausgeführt ist. Eine solche plane Blende ist einfach und sehr kostengünstig herstellbar und liegt mit ihrer Blendenkante genau in der Fläche, in welcher der Flansch des Reflektors verläuft.

Ferner ist es vorteilhaft, wenn die ortsfeste Blende an einem großen Teil des unterhalb ihrer Blendenkante verlaufenden Flanschabschnitts des Reflektors flächig anliegt und aus ihrem unteren Randabschnitt Fahnen freigeschnitten sind, welche zur Rückseite des Reflektors hin umgebogen sind und durch entsprechend große Öffnungen des Flansches hindurchgesteckt sind und mit dem aus der Öffnung des Flansches herausragenden freien Endabschnitt umgebogen sind. Eine solche Blende versteift einen aus Blech hergestellten, dünnwandigen Reflektor, und es sind zum Befestigen der Blende an dem Flansch des Reflektors keine separaten Verbindungsmittel notwendig.

Bei einer besonders vorteilhaften Weiterbildung der Erfindung ist der Reflektor einstückig aus einem den inneren und äußeren Brennort aufweisenden schalenförmigen ersten Abschnitt und einem diesen Abschnitt mit dem Flansch verbindenden umlaufenden zweiten Abschnitt hergestellt. Dieser zweite Abschnitt dient zusammen mit den Beinen des Gestells als Verbindungselement zwischen dem optisch wirksamen ersten Abschnitt des Reflektors und der Linse. Bei einem zylindrisch gestalteten zweiten Abschnitt baut der Reflektor an seiner Lichtaustrittsfläche so klein wie möglich. Der zweite Abschnitt kann sich aber auch entgegen der Lichtaustrittsrichtung verjüngen. Dies ist insbesondere dann vorteilhaft, wenn der zweite Abschnitt zusätzlich eine Reflexionsfläche aufweist, an welcher an der Linse vorbeigehende Lichtstrahlen reflektieren. Diese Lichtstrahlen können eine verbesserte Vorfeldbeleuchtung ergeben oder den Bereich der die Linse abdeckenden Lichtscheibe mit Licht beaufschlagen, welcher seitlich der Linse verläuft.

In der Zeichnung ist ein Ausführungsbeispiel der Erfindung dargestellt, und zwar zeigt
- Fig. 1: einen mittleren vertikalen Längsschnitt durch einen in ein Gehäuse eines Scheinwerfers eingesetzten Abblendlichtscheinwerfer, welcher an einem Tragelement befestigt ist und durch eine das Gehäuse abschließende Lichtscheibe abgedeckt ist und
- Fig. 2: eine Ansicht aus Richtung X auf den Abblendlichtscheinwerfer, ohne das Tragelement, das Gehäuse und die Lichtscheibe.

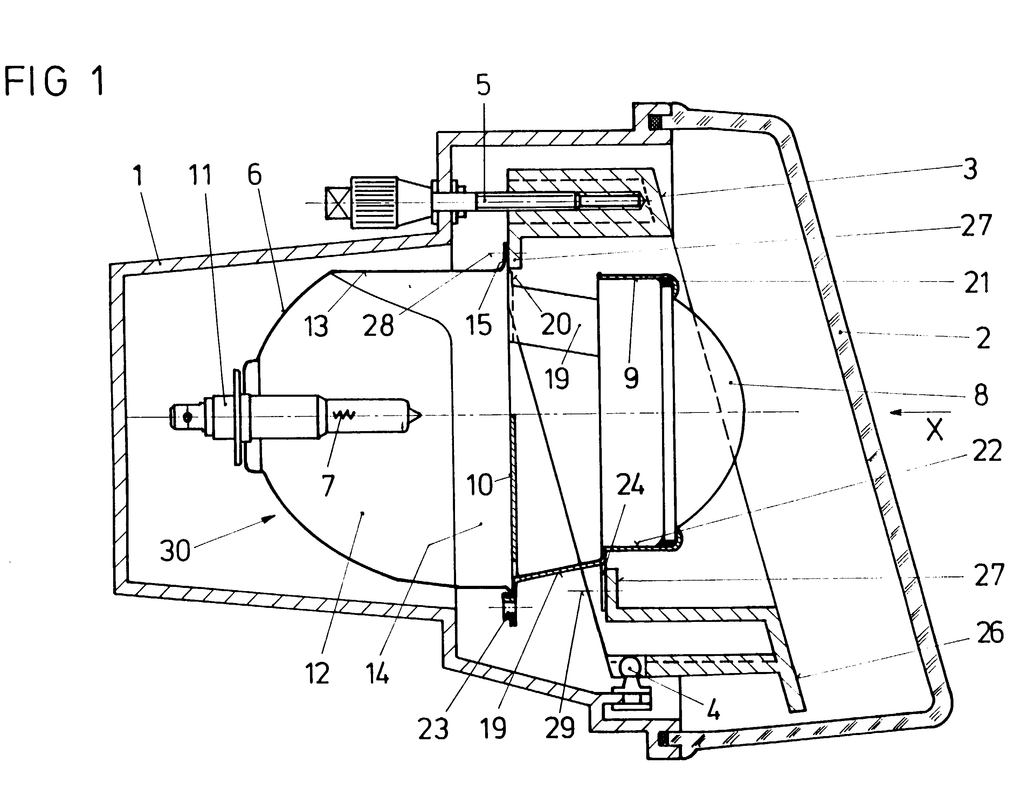

Der Innenraum des Scheinwerfers ist von einem topfförmigen Gehäuse (1) und von einer das Gehäuse abschließenden, lichtdurchlässigen Lichtscheibe (2) gebildet. Ein aus Kunststoff bestehendes Tragelement (3) eines Abblendlichtscheinwerfers (30) ist am Gehäuse (1) um eine horizontale und vertikale (nicht dargestellt) Achse verschwenkbar gelagert. Die horizontale Achse geht durch den ortsfesten Schwenkpunkt (4), welcher von einer an der Innenseite des Gehäuses befestigten Kugel und einer in den Tragrahmen (3) eingebrachten Kugelschale gebildet ist. Um die horizontale Schwenkachse ist das Tragelement (3) und der mit ihm starr verbundene Abblendlichtscheinwerfer (30) durch eine Einstellvorrichtung (5) verschwenkbar. Die Einstelleinrichtung (5) besteht aus einer in der Wandung des Gehäuses verdrehbar gelagerten Einstellschraube, welche an dem aus dem Gehäuse nach außen ragenden Endabschnitt ein als Handhabe dienendes Griffteil aufweist und mit dem in den Innenraum des Scheinwerfers ragenden Gewindebolzen in eine Gewindebohrung des Tragelements (3) eingreift. Das Tragelement (3) trägt nicht nur den in Fig. 1 dargestellten Abblendlichtscheinwerfer (30), sondern auch einen seitlich dem Abblendlichtscheinwerfer angeordneten Fernlichtreflektor (nicht dargestellt). Dieser Fernlichtreflektor kann einteilig mit dem Tragelement (3) ausgeführt sein. Mit dem Tragelement (3) könnten auch noch weitere Reflektoren verbunden sein.

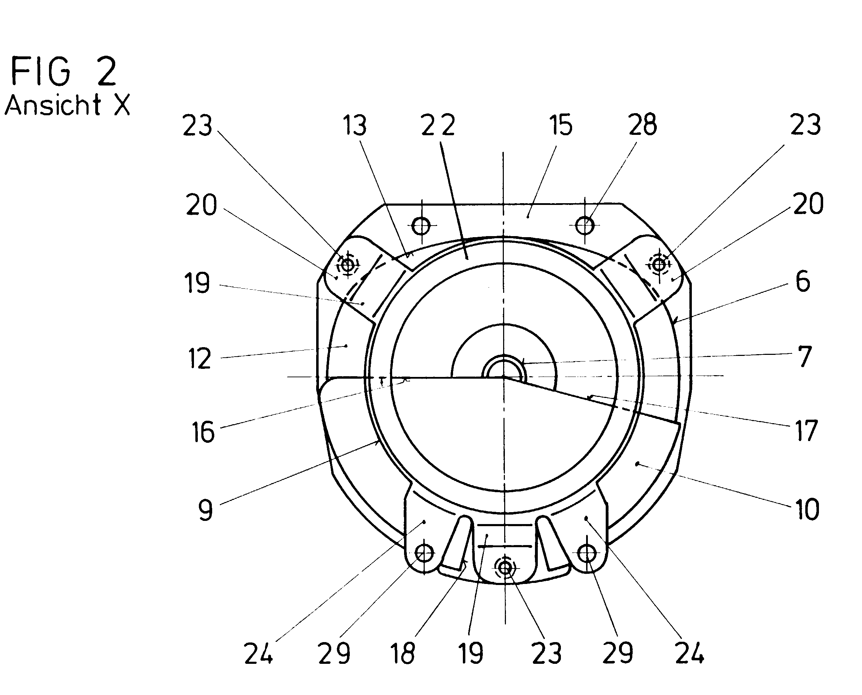

Der in Fig. 1 und 2 dargestellte Abblendlichtscheinwerfer (30) besteht aus einem schalenförmigen Reflektor (6) mit einem inneren und äußeren Brennort, einer im inneren Brennort des Reflektors angeordneten Lichtquelle (7), einer aus Glas hergestellten Linse (8), einem die Linse tragenden Gestell (9) und einer zwischen der Linse (8) und der Lichtquelle (7) angeordneten Blende (10). Als Lichtquelle (7) dient die Glühwendel der Glühlampe (11), welche mit ihrem Glaskolben voraus durch eine Öffnung im Scheitel des schalenförmigen Reflektors (6) hindurchgesteckt ist und mit dem umlaufenden Flansch ihres Sockels an dem äußeren umlaufenden Rand der Öffnung des Reflektors anliegt und durch eine nicht dargestellte Haltefeder an dem Reflektor (6) befestigt ist. Der schalenförmige Reflektor (6) setzt sich aus drei Abschnitten zusammen, und zwar dem ersten Abschnitt (12) mit dem inneren und äußeren Brennort, dem zweiten Abschnitt (13), welcher in der Anbaulage des Scheinwerfers von einer oberen Abflachung gebildet ist, und dem zylindrisch gestalteten dritten Abschnitt (14), welcher sich zusammen mit dem zweiten Abschnitt (13) von dem ersten Abschnitt (12) ausgehend bis zu der senkrechten Fläche hin erstreckt, in welcher die Blende (10) verläuft. Der Reflektor (6) weist an seinem äußeren umlaufenden Rand einen radial nach außen gerichteten Flansch (15) auf. Die in Lichtaustrittsrichtung gerichtete Fläche des Flansches (15) dient für die Blende (10) als Anlagefläche. Die Blende (10) ist unterhalb der horizontal verlaufenden Mittelebene des Abblendlichtscheinwerfers angeordnet und weist eine als Hell-Dunkel-Grenze abgebildete Blendenkante (16, 17) auf. Der Abschnitt (16) der Blendenkante verläuft entgegen der Lichtaustrittsrichtung gesehen, ausgehend von der optischen Achse, nach links horizontal, und der Abschnitt (17) verläuft nach rechts abfallend. Die Blendenkante (16, 17) ist als Hell-Dunkel-Grenze einer asymmetrischen Lichtfigur abgebildet. Die Blende (10) verläuft mit ihrer Blendenkante auf beiden Seiten bis zum Flansch (15) des Reflektors hin und liegt unterhalb der Blendenkante (16, 17) bis auf die mittig in den unteren Randabschnitt der Blende (10) eingebrachte Aussparung (18) an dem Flansch (15) des Reflektors an. Aus dem an dem Flansch (15) anliegenden Randabschnitt der Blende (10) sind Fahnen (nicht dargestellt) freigeschnitten, welche zur Rückseite des Reflektors hin abgewinkelt sind und durch entsprechende Öffnungen in dem Flansch des Reflektors (6) hindurchgehen. Durch Umbiegen dieser Fahnen auf der Rückseite des Flansches ist die Blende (10) bei flächiger Anlage an dem Flansch (15) an dem Reflektor (6) befestigt. Da bei einem solchen Reflektor weitgehend der Abschnitt (12) mit dem inneren und äußeren Brennpunkt optisch wirksam ist, dient der zwischen diesem Abschnitt (12) und der Blende (10) angeordnete Abschnitt (14) des Reflektors ausschließlich der Halterung des optisch wirksamen Abschnitts (12) und der Glühlampe (11).

An dem umlaufenden Flansch (15) des Reflektors (6) liegt an der in Lichtaustrittsrichtung gerichteten Fläche außer der Blende (10) das die Linse (8) tragende Gestell (9) mit den radial nach außen abgewinkelten Endabschnitten (20) seiner drei Beine (19) flächig an. Die Linse (8) ist vor der Montage des tischartigen Gestells (9) von seiner Unterseite her in eine Öffnung der Oberseite des Gestells eingesetzt und ist an dem Gestell (9) durch einen Kleber (21) befestigt. Das Gestell (9) ist, wie der Reflektor (6), aus einem dünnwandigen Blech hergestellt, und die die Linse (8) aufnehmende Oberseite (22) ist ein kreisringförmiger Abschnitt. An den kreisringförmigen Abschnitt (22) sind die drei Beine (19) angeformt. Aus den radial nach außen abgewinkelten Endabschnitten (20) der drei Beine ist zur Rückseite des Scheinwerfers hin eine Hülse (23) herausgedrückt, welche als ein einstückig mit dem Endabschnitt (20) ausgeführter Hohlniet dient. Das Gestell (9) liegt mit den Endabschnitten (20) seiner Beine (19) flächig an dem Flansch (15) an, und die Hülsen (23) gehen durch entsprechend große Öffnungen des Flansches hindurch, und ihre aus der Öffnung nach hinten herausragenden Endabschnitte sind umgebördelt. Das Gestell ist zu einer senkrechten Ebene, in welcher die optische Achse des Abblendlichtscheinwerfers verläuft, symmetrisch gestaltet, wobei eines der drei Beine (19) unterhalb der horizontalen Mittelebene des Abblendlichtscheinwerfers in der Symmetrieebene verläuft. Seitlich dieses unteren Beines (19) ist jeweils an den ringförmigen Abschnitt (22) ein weiteres Bein (24) angeformt. Das Bein ist um eine an den ringförmigen Abschnitt (22) unmittelbar angrenzende Biegelinie radial nach außen gebogen.

Das Tragelement (3) weist einen das Gestell und die Linse umgebenden Tubus (25) auf, welcher an seinem vorderen Rand in eine Sichtblende (26) übergeht, welche den Blick auf die Einstelleinrichtung (5) abschirmt. Das Tragelement (3) verläuft mit seiner Vorderseite von unten nach oben zur Rückseite hin abgeschrägt und ist mit seinem zur Rückseite des Scheinwerfers hin gerichteten Randabschnitt seines Tubus (25) an den unteren beiden Beinen (24) und dem oberen Randabschnitt seines Tubus (25) an dem Flansch (15) des Reflektors (6) befestigt. An den oberen und unteren Befestigungsstellen (28 und 29) weist der Tubus einen radial nach innen vorspringenden Wandabschnitt (27) auf, an dessen entgegen der Lichtaustrittsrichtung gerichteten Seite die Beine (24) bzw. der obere Randabschnitt des Flansches (15) des Reflektors flächig anliegen. Der Reflektor ist mit seinem Flansch (15) und das Gestell mit den beiden Beinen (24) durch eine Schraubverbindung (nicht dargestellt) stabil mit dem Tragelement (3) verbunden.

### Bezugszahlen

### Scheinwerfer für Fahrzeuge

(1) Gehäuse
(2) Lichtscheibe
(3) Tragelement
(4) Schwenkpunkt
(5) Einstelleinrichtung
(6) Reflektor
(7) Lichtquelle
(8) Linse
(9) Gestell
(10) Blende
(11) Glühlampe
(12) erster Abschnitt
(13) zweiter Abschnitt
(14) dritter Abschnitt
(15) Flansch
(16) Blendenkante
(17) Blendenkante
(18) Aussparung
(19) Beine
(20) Endabschnitte
(21) Kleber
(22) ringförmiger Abschnitt
(23) Hohlniet
(24) Bein
(25) Tubus
(26) Sichtblende
(27) Wandabschnitt
(28) Befestigungsstelle
(29) Befestigungsstelle

## Patentansprüche

1. Scheinwerfer für Fahrzeuge mit folgenden Merkmalen:
- ein Scheinwerfergehäuse (1) ist auf seiner Vorderseite durch eine Lichtscheibe (2) abgeschlossen und nimmt einen Abblendlichtscheinwerfer auf,
- der Abblendlichtscheinwerfer besteht aus
- einem Reflektor (6) mit einem inneren und äußeren Brennort und einem an seinem äußeren Rand angebrachten radial nach außen gerichteten Flansch (15),
- einer im Bereich des inneren Brennortes des Reflektors (6) angeordneten Lichtquelle (7),
- einem aus Blech hergestellten, tischartigen Gestell (9), welches mit dem freien Endabschnitt seiner Beine (19) an der in Lichtaustrittsrichtung gerichteten Seite des Flansches (15) des Reflektors (6) anliegt und an dem Flansch (15) befestigt ist,
- einer aus Glas hergestellten Linse (8), welche in eine Öffnung in der Oberseite (22) des tischartigen Gestells (9) eingesetzt ist,
- einer zwischen Linse (8) und Lichtquelle (7) angeordneten Blende (10), deren Blendenkante (16, 17) als Hell-Dunkel-Grenze abgebildet ist,
- der Abblendlichtscheinwerfer ist mit dem Flansch (15) des Reflektors (6) an einem mit dem Scheinwerfergehäuse verbundenen Tragelement (3) befestigt,
dadurch gekennzeichnet, daß
- das tischartige Gestell (9) zusätzlich zu den mit dem Reflektor (9) verbundenen Beinen (19) mindestens ein weiteres Bein (24) aufweist, mit welchem das Gestell (9) zwischen dem Flansch (15) des Reflektors (6) und der Linse (8) an dem Tragelement (3) befestigt ist,
- an der in Lichtaustrittsrichtung gerichteten Seite des Flansches (15) des Reflektors (6) außer dem Gestell (9) auch die von einem separaten Teil gebildete Blende (10) anliegt und an dem Flansch (15) des Reflektors (6) befestigt ist.

2. Scheinwerfer nach Anspruch 1, dadurch gekennzeichnet, daß das Gestell (9) mit einem radial nach außen gebogenen Abschnitt des Beins (24) an dem Tragelement (3) befestigt ist.

3. Scheinwerfer nach Anspruch 2, dadurch gekennzeichnet, daß der Abschnitt des Beins (24) um eine an die ringförmige Oberseite (22) des Gestells (9) angrenzend verlaufende Biegelinie abgebogen ist.

4. Scheinwerfer nach einem der Ansprüche 1 bis 3, dadurch gekennzeichnet, daß in der Anbaulage des Abblendlichtscheinwerfers sein Reflektor (6) oberhalb und das Gestell (9) unterhalb oder der Reflektor (6) unterhalb und das Gestell (9) oberhalb der horizontalen Mittelebene des Abblendlichtscheinwerfers an dem Tragelement (3) befestigt ist.

5. Scheinwerfer nach Anspruch 4, dadurch gekennzeichnet, daß das tischartige Gestell (9) an dem Tragelement (3) mit zwei Beinen (24) befestigt ist und zwischen diesen beiden Beinen (24) ein an dem Flansch (15) des Reflektors (6) befestigtes Bein (19) verläuft, welches in einer in Lichtaustrittsrichtung und senkrecht verlaufenden Symmetrieebene des Gestells (9) liegt.

6. Scheinwerfer nach einem der Ansprüche 1 bis 5, dadurch gekennzeichnet, daß bei einem Gestell (9), bei welchem die mit dem Flansch (15) des Reflektors (6) verbundenen Beine mit ihrem freien Endabschnitt (20) radial nach außen gebogen sind, ein Hohlniet (23) einteilig mit dem abgebogenen Endabschnitt (20) der Beine (19) ausgeführt ist und durch eine entsprechend große Öffnung des Flansches (15) hindurchgesteckt ist und mit dem aus der Öffnung herausragenden Abschnitt umgebördelt ist.

7. Scheinwerfer nach einem der Ansprüche 1 bis 6, dadurch gekennzeichnet, daß die ortsfeste Blende (10) plan ausgeführt ist.

8. Scheinwerfer nach einem der Ansprüche 1 bis 7, dadurch gekennzeichnet, daß die ortsfeste Blende (10) an einem großen Teil des unterhalb ihrer Blendenkante (16, 17) verlaufenden Abschnitts des Flansches (15) des Reflektors (6) flächig anliegt.

9. Scheinwerfer nach einem der vorstehenden Ansprüche 1 bis 8, dadurch gekennzeichnet, daß aus dem unteren Randabschnitt der Blende (10) Fahnen freigeschnitten sind, welche zur Rückseite des Reflektors hin umgebogen sind und durch entsprechend große Öffnungen des Flansches hindurchgesteckt sind und mit dem aus der Öffnung des Flansches (15) herausragenden freien Endabschnitt umgebogen sind.

10. Scheinwerfer nach einem der Ansprüche 1 bis 9, dadurch gekennzeichnet, daß der Reflektor (6) einstückig aus einem den inneren und äußeren Brennort aufweisenden, schalenförmigen ersten Abschnitt und einem diesen ersten Abschnitt mit dem Flansch verbindenden umlaufenden zweiten Abschnitt hergestellt ist.

11. Scheinwerfer nach Anspruch 10, dadurch gekennzeichnet, daß der zweite Abschnitt ein zylindrischer Wandungsabschnitt ist.

12. Scheinwerfer nach Anspruch 10, dadurch gekennzeichnet, daß der zweite Abschnitt ein sich entgegen der Lichtaustrittsrichtung verjüngender Wandungsabschnitt ist.

## Claims

1. Headlamp for vehicles, having the following features:
- a headlamp housing (1) is closed on its front side by a lamp glass (2) and accommodates a dipped beam headlamp,
- the dipped beam headlamp comprises
- a reflector (6) having an inner and outer focal position and a flange (15) which is mounted on its outer edge and is directed radially outwards,
- a light source (7) arranged in the region of the inner focal position of the reflector (6),
- a table-like frame (9) which is made of sheet metal, bears, with the free end portion of its legs (19), against that side of the flange (15) of the reflector (6) which is directed in the light-exit direction, and is fastened to the flange (15),
- a lens (8) which is made of glass and is inserted into an opening in the upper side (22) of the table-like frame (9),
- a stop (10) which is arranged between the lens (8) and the light source (7) and the stop edge (16, 17) of which is projected as a light/dark boundary,
- the dipped beam headlamp is fastened to a supporting element (3), which is connected to the headlamp housing, by means of the flange (15) of the reflector (6),
characterized in that
- the table-like frame (9) has, in addition to the legs (19) connected to the reflector (6), at least one further leg (24) with which the frame (9) is fastened, between the flange (15) of the reflector (6) and the lens (8), to the supporting element (3),
- apart from the frame (9) also the stop (10), which is formed by a separate part, bears against that side of the flange (15) of the reflector (6) which is directed in the light-exit direction, and is fastened to the flange (15) of the reflector (6).

2. Headlamp according to Claim 1, characterized in that the frame (9) is fastened to the supporting element (3) with a radially outwardly bent portion of the leg (24).

3. Headlamp according to Claim 2, characterized in that the portion of the leg (24) is bent around a bending line running adjacent to the annular upper side (22) of the frame (9).

4. Headlamp according to one of Claims 1 to 3, characterized in that in the mounted position of the dipped beam headlamp its reflector (6) is fastened to the supporting element (3) above and the frame (9) below, or the reflector (6) below and the frame (9) above, the horizontal centre plane of the dipped beam headlamp.

5. Headlamp according to Claim 4, characterized in that the table-like frame (9) is fastened to the supporting element (3) with two legs (24) and between these two legs (24) there runs a leg (19) which is fastened to the flange (15) of the reflector (6) and lies in a plane of symmetry of the frame (9) running perpendicularly and in the light-exit direction.

6. Headlamp according to one of Claims 1 to 5, characterized in that in a frame (9), in which the legs connected to the flange (15) of the reflector (6) are bent, with their free end portion (20), radially outwards, a hollow rivet (23) is fashioned in one piece together with the bent end portion (20) of the legs (19) and is passed through a correspondingly sized opening in the flange (15) and is flanged by means of that portion which protrudes out of the opening.

7. Headlamp according to one of Claims 1 to 6, characterized in that the fixed stop (10) is of planar design.

8. Headlamp according to one of Claims 1 to 7, characterized in that the fixed stop (10) bears flush against a large part of that portion of the flange (15) of the reflector (6) which runs below its stop edge (16, 17).

9. Headlamp according to one of the preceding Claims 1 to 8, characterized in that tabs are cut free from the lower edge portion of the stop (10), which tabs are bent over towards the rear side of the reflector and are passed through correspondingly sized openings in the flange and are bent over by means of that free end portion which protrudes out of the opening in the flange (15).

10. Headlamp according to one of Claims 1 to 9, characterized in that the reflector (6) is produced in one piece from a shell-shaped first portion, which has the inner and outer focal position, and a surrounding second portion which connects this first portion to the flange.

11. Headlamp according to Claim 10, characterized in that the second portion is a cylindrical wall portion.

12. Headlamp according to Claim 10, characterized in that the second portion is a wall portion which tapers counter to the light-exit direction.

## Revendications

1. Projecteur ou phare pour des véhicules, présentant les éléments suivants :
- un boîtier de projecteur (1) est refermé sur sa face avant par une plaque d'éclairement (2) et reçoit un projecteur de feu de croisement,
- le projecteur de feu de croisement est constitué par :
-- un réflecteur (6) présentant un foyer intérieur et un foyer extérieur et une bride (15) fixée à sa bordure extérieure et dirigée radialement vers l'extérieur,
-- une source lumineuse (7) agencée dans la région du foyer intérieur du réflecteur (6),
-- un montant (9) fabriqué en tôle et en forme de table, qui s'appuie par le tronçon d'extrémité libre de ses pieds (19) contre la face de la bride (15) du réflecteur, laquelle est dirigée en direction de la sortie de lumière, et qui est fixé sur la bride (15),
-- une lentille (8) fabriquée en verre, qui est mise en place dans une ouverture dans la face supérieure (22) du montant (9) en forme de table,
-- un diaphragme (10) agencé entre la lentille (8) et la source lumineuse (7), l'image de l'arête de diaphragme (16, 17) formant une limite clair/obscur,
- le projecteur de feu de croisement est fixé avec la bride (15) du réflecteur (6) sur un élément de support (3) relié au boîtier du projecteur, caractérisé en ce que :
- le montant (9) en forme de table présente, en supplément aux pieds (19) reliés au réflecteur (6), au moins un autre pied (24) au moyen duquel le montant (9) sur l'élément de support (3) est fixé entre la bride (15) du réflecteur (6) et la lentille (8),
- contre la face de la bride (15) du réflecteur (6), qui est dirigée en direction de sortie de lumière, s'appuie, outre le montant (9), également le diaphragme (10) formé par une pièce séparée, et il est fixé sur la bride (15) du réflecteur (6).

2. Projecteur selon la revendication 1, caractérisé en ce que le montant (9) est fixé sur l'élément de support (3), par un tronçon coudé radialement vers l'extérieur du pied (24).

3. Projecteur selon la revendication 2, caractérisé en ce que le tronçon du pied (24) est coudé autour d'une ligne de flexion jouxtant la face supérieure annulaire (22) du montant (9).

4. Projecteur selon l'une quelconque des revendications 1 à 3, caractérisé en ce que dans la position de montage du projecteur de feu de croisement, son réflecteur (6) est fixé sur l'élément de support (3) au-dessus du plan médian horizontal du projecteur de feu de croisement et le montant (9) est fixé au-dessous de ce plan, ou bien le réflecteur (6) est fixé au-dessous dudit plan et le montant (9) au-dessus de celui-ci.

5. Projecteur selon la revendication 4, caractérisé en ce que le montant (9) en forme de table est fixé avec deux pieds (24) sur l'élément de support (3), et entre ces deux pieds (24) s'étend un pied (19) fixé sur la bride (15) du réflecteur (6), ce pied étant situé dans un plan de symétrie du montant (9), qui s'étend en direction de sortie de lumière et verticalement.

6. Projecteur selon l'une quelconque des revendications 1 à 5, caractérisé en ce que dans le montant (9) dans lequel les pieds reliés à la bride (15) du réflecteur (6) sont coudés par leur tronçon d'extrémité libre (20) radialement vers l'extérieur, un rivet tubulaire (23) est réalisé en une seule pièce avec le tronçon d'extrémité coudé (20) des pieds (19), et est enfilé à travers une ouverture de taille correspondante de la bride (15), et est rabattu avec le tronçon dépassant hors de l'ouverture.

7. Projecteur selon l'une quelconque des revendications 1 à 6, caractérisé en ce que le diaphragme (10) fixe est réalisé de façon plane.

8. Projecteur selon l'une quelconque des revendications 1 à 7, caractérisé en ce que le diaphragme fixe (10) s'appuie à plat contre une grande partie du tronçon de la bride (15) du réflecteur (6), qui s'étend au-dessous de son arête de diaphragme (16, 17).

9. Projecteur selon l'une quelconque des revendications précédentes 1 à 8, caractérisé en ce que des pattes sont découpées depuis le tronçon de bordure inférieur du diaphragme (10), qui sont rabattues vers la face arrière du réflecteur, qui sont enfilées à travers des ouvertures de taille correspondante de la bride, et qui sont coudées avec le tronçon d'extrémité libre dépassant hors de l'ouverture de la bride (15).

10. Projecteur selon l'une quelconque des revendications 1 à 9, caractérisé en ce que le réflecteur (6) est réalisé en une seule pièce par un premier tronçon en forme de coque présentant le foyer intérieur et le foyer extérieur, et par un second tronçon périphérique reliant ce premier tronçon à la bride.

11. Projecteur selon la revendication 10, caractérisé en ce que le second tronçon est un tronçon de paroi cylindrique.

12. Projecteur selon la revendication 10, caractérisé en ce que le second tronçon est un tronçon de paroi en rétrécissement en sens opposé à la direction de sortie de lumière.
